(19) Europäisches Patentamt

European Patent Office

Office européen des brevets

(11) **EP 1 415 124 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(21) Anmeldenummer: **02754980.7**

(22) Anmeldetag: **06.08.2002**

(51) Int Cl.:
*G01B 5/00* *(2006.01)*   *G01B 21/04* *(2006.01)*

(86) Internationale Anmeldenummer:
**PCT/EP2002/008775**

(87) Internationale Veröffentlichungsnummer:
**WO 2003/014655 (20.02.2003 Gazette 2003/08)**

(54) **KORREKTUR DES TEMPERATURFEHLERS BEI EINER MESSUNG MIT EINEM KOORDINATENMESSGERÄT**

CORRECTION OF THE TEMPERATURE ERROR DURING A MEASUREMENT CONDUCTED BY A COORDINATE MEASURING DEVICE

CORRECTION D'UNE ERREUR DUE A LA TEMPERATURE PENDANT UNE MESURE A L'AIDE D'UN APPAREIL DE MESURE DE COORDONNEES

(84) Benannte Vertragsstaaten:
**DE FR GB IT**

(30) Priorität: **09.08.2001 DE 10138138**

(43) Veröffentlichungstag der Anmeldung:
**06.05.2004 Patentblatt 2004/19**

(73) Patentinhaber: **Carl Zeiss Industrielle Messtechnik GmbH**
**73447 Oberkochen (DE)**

(72) Erfinder:
• **SCHEPPERLE, Karl**
**73447 Oberkochen (DE)**
• **WIEDMANN, Wolfgang**
**73434 Aalen (DE)**

(74) Vertreter: **Köllner, Malte et al**
**Köllner & Partner**
**Patentanwälte**
**Kennedyallee 109**
**60596 Frankfurt am Main (DE)**

(56) Entgegenhaltungen:
**EP-A- 1 128 156         GB-A- 2 227 563**
**US-B1- 6 167 634**

**Beschreibung**

Koordinatenmessgeräte (KMG) spielen eine zentrale Rolle bei der Qualitätskontrolle von gefertigten Bauteilen.

Wenn mit einem Koordinatenmessgerät außerhalb von klimatisierten Räumen oder Kabinen gemessen wird, dann müssen die Taster des Koordinatenmessgeräts in relativ kurzen Zeitabständen immer wieder neu kalibriert werden. Denn schon geringe Abweichungen von der Bezugstemperatur, für die eine einmal durchgeführte Kalibrierung vorgenommen wurde, führen aufgrund der thermischen Längenausdehnung der Taster zu Messfehlern. Ein Aluminiumtaster mit einer Länge von 100 mm dehnt sich beispielsweise bei einer Temperaturerhöhung von 1,1°C um 2,5 μm aus. Dieser Fehler kann die zulässige Messunsicherheit des verwendeten Koordinatenmessgerätes bereits übersteigen.

Da bei einem Messvorgang für ein komplettes Werkstück in der Regel mehrere unterschiedliche Taster nacheinander eingewechselt werden und diese Taster entweder aus einem Ablageschrank oder einem am Rande des Messbereiches aufgebauten Magazin entnommen werden, kann sich deren Temperatur zwischenzeitlich geändert haben. Entsprechend müsste nach jedem Tasterwechsel wieder neu kalibriert werden, um genaue Messungen zu erhalten. Dies verlangsamt den gesamten Messablauf und ist insbesondere im Fertigungsbereich nachteilig, wo schnelle Messergebnisse gefordert werden.

Die vorstehend genannten Schwierigkeiten lassen sich dadurch umgehen, dass die Taster aus Materialien mit geringem thermischen Ausdehnungskoeffizienten wie z. B. Invar gefertigt werden. Es sind auch Taststifte bekannt (siehe DE 297 04 636), die aus mindestens zwei Materialien bestehen, von denen eines einen positiven und eines einen negativen thermischen Ausdehnungskoeffizienten hat. Die effektive Länge des Taststifts und die thermischen Ausdehnungskoeffizienten bzw. die Materialien werden derart gewählt, dass die Länge des Taststifts sich mit der Temperatur kaum ändert. Eine mögliche Materialkombination ist kohlefaser-verstärkter Kunststoff (CFK) mit einem negativen thermischen Ausdehnungskoeffizienten zusammen mit Stahl, Aluminium und/oder eventuell keramischem Material. Taststifte aus diesen Materialien sind jedoch in der Herstellung aufwendig. Eine Umstellung der Taster auf diese Materialen ist deshalb nicht ohne weiteres möglich.

Ein weiteres Verfahren zur Reduzierung von Temperatureinflüssen bei Koordinatenmessgeräten ist in der DE 36 31 825 beschrieben. Bei dem beschriebenen Verfahren werden die benötigten Temperaturen bzw. Korrekturdatensätze bei mehreren unterschiedlichen Temperaturen ermittelt und im Rechner des Koordinatenmessgeräts gespeichert. Das Koordinatenmessgerät wird zur Temperierung mit einer wärmeisolierenden Kabine umgeben. In die Kabine wird temperierte Luft eingeblasen. Die Temperatur der eingeblasenen Luft wird gemessen und zur Auswahl des aktuell benötigten Korrekturdatensatzes verwendet.

Am einfachsten ist es, wenn die thermische Längenausdehnung zugelassen wird und eine nachträgliche Korrektur der Messergebnisse anhand der Temperaturwerte und entsprechend ermittelter Korrekturdaten erfolgt.

Dazu beschreibt die US-B-6,167,634 ein Verfahren zur Korrektur des Temperaturfehlers bei einer Messung mit einem Koordinatenmessgerät, bei dem die benötigten Korrekturdaten aus Kalibrierdaten ermittelt werden, die aus Messungen eines externen Interferometers berechnet werden.

Aufgabe der Erfindung ist es, die Temperatur-Korrektur von Messungen mit Koordinatenmessgeräten weiter zu vereinfachen.

Diese Aufgabe wird durch die Erfindungen gemäß den unabhängigen Ansprüchen gelöst. Vorteilhafte Weiterbildungen der Erfindungen sind in den abhängigen Ansprüchen gekennzeichnet.

Erfindungsgemäß erfolgen zunächst eine Bestimmung und Aufzeichnung der vorgefundenen Temperatur von wenigstens einem Teil des Koordinatenmessgeräts und eine zugehörige Bestimmung und Aufzeichnung von Kalibrierdaten des wenigstens einen Teils des Koordinatenmessgeräts bei der vorgefundenen Temperatur. Die vorgefundene Temperatur ist dabei eine Temperatur, die ohne eine gezielte Einstellung etwa in einer Temperierungskabine angetroffen wurde. Beispielsweise wird eine derartige Temperatur morgens früh zu Arbeitsbeginn oder im weiteren Verlauf des Tages vorgefunden. Ein KMG ist natürlicherweise auf die Temperatur des Raums temperiert, in dem es sich befindet.

Die Bestimmung und Aufzeichnung der vorgefundenen Temperatur und/oder der Kalibrierdaten wird durch das Koordinatenmessgerät durchgeführt.

Unter Kalibrierdaten werden Daten über die Länge oder Drehung, allgemein die Geometrie eines Teils des Koordinatenmessgeräts verstanden. Die Kalibrierdaten geben die Abweichung vom Bezugspunkt in Form eines Vektors wieder. Sie werden aus den aufgenommenen Maschinenkoordinaten berechnet.

Die betrachteten Teile des KMG können beispielsweise die Ständer, die Arme, die Pinole oder das Dreh-Schwenk-Gelenk, der Tastkopf oder die Taststifte, jeweils allein oder in Kombination, sein. Für den vorliegenden Fall wird als das wenigstens eine Teil des Koordinatenmessgeräts wenigstens ein Taststift oder eine Taststiftkombination gewählt.

Der vorgenannte Schritt wird mindestens einmal wiederholt. Bei der zu einem späteren Zeitpunkt durchgeführten Wiederholung werden die zu dem späteren Zeitpunkt vorgefundene neue Temperatur und die zugehörigen Kalibrierdaten aufgezeichnet. Es entsteht so eine quasi historische Sammlung von unterschiedlichen Temperaturen und zugehörigen Kalibrierdaten. Beispielsweise werden Temperaturen und Kalibrierdaten jeden Morgen bei der initialen Kalibrierung des Koordinatenmessgeräts bestimmt.

Aus den aufgezeichneten Temperaturen und zugehörigen Kalibrierdaten werden Temperatur-Korrekturdaten für das wenigstens eine Teil des Koordinatenmessgeräts ermittelt. Dabei kann es sich um eine einfache lineare Kompensation mit Hilfe des aus den ermittelten Daten bestimmten thermischen Ausdehnungskoeffizienten handeln. Ebenso gut ist eine nichtlineare Kompensation möglich, etwa durch Anpassung von Polynomen. Auch denkbar ist eine mehrdimensionale Anpassung, etwa zur Beschreibung von Verwindungen, die durch Asymmetrien im Tastkopf hervorgerufen werden können. Derartige Verwindungen können durch eine Kombination von Drehmatrizen und Dehnungsoperatoren (Multiplikationen, ggf. in Verbindung mit Translationen) beschrieben werden. Mit Hilfe dieser Daten können z. B. die Längenmaßstäbe des KMG, die Länge der Arme eines KMG, z. B. eines Ständer-KMG, oder die Abmessungen des Tastkopfes oder Taststifts korrigiert werden.

Bei der tatsächlichen Durchführung einer Messung mit Hilfe eines Koordinatenmessgeräts wird die bei der Messung angetroffene Temperatur des wenigstens einen Teils des Koordinatenmessgeräts bestimmt. Die Messung der Temperatur kann während des Vorgangs unmittelbar vor oder unmittelbar danach erfolgen, jedenfalls in so enger zeitlicher Nähe, dass auf die Temperatur des Teils des Koordinatenmessgeräts zum Zeitpunkt der Längenmessung geschlossen werden kann.

Die Temperatur kann dabei auf mindestens drei Weisen gemessen werden. Sie kann erstens am Werkstück gemessen werden. Da eigentlich die Temperatur eines Teils des Koordinatenmessgeräts bestimmt werden soll, ist eine Bestimmung der Temperatur des Werkstücks, aus der auf die Temperatur des Teils des Koordinatenmessgeräts geschlossen werden soll, eher ungenau. Die Temperatur des Werkstücks und die Temperatur des Teils des Koordinatenmessgeräts müssen nicht übereinstimmen. Zweitens kann die Temperatur in der Nähe des Teils des Koordinatenmessgeräts gemessen werden, und drittens kann die Temperatur an dem Teil des Koordinatenmessgeräts selbst gemessen werden. Letzteres ist klarerweise die exakteste Methode.

Aufgrund der bei der Messung bestimmten Temperatur des wenigstens einen Teils des Koordinatenmessgeräts können geeignete Temperatur-Korrekturdaten für das wenigstens eine Teil des Koordinatenmessgeräts aus den gespeicherten Korrekturdaten ermittelt werden.

Das erfindungsgemäße Verfahren ist allgemein für Temperaturkorrekturen einsetzbar. Es ist in seiner Einfachheit kaum zu überbieten. Insbesondere bedarf es keiner gesonderten Temperierung des KMG etwa in einer Kabine. Aus der empirisch beobachteten und aufgezeichneten Messhistorie wird der Zusammenhang für die Temperaturkorrektur abgeleitet. Dabei werden die natürlichen Temperaturschwankungen in einem Labor zwischen Sommer und Winter und aufgrund sonstiger Einflüsse wie Wetter, Heizung, etc. ausgenutzt und protokolliert.

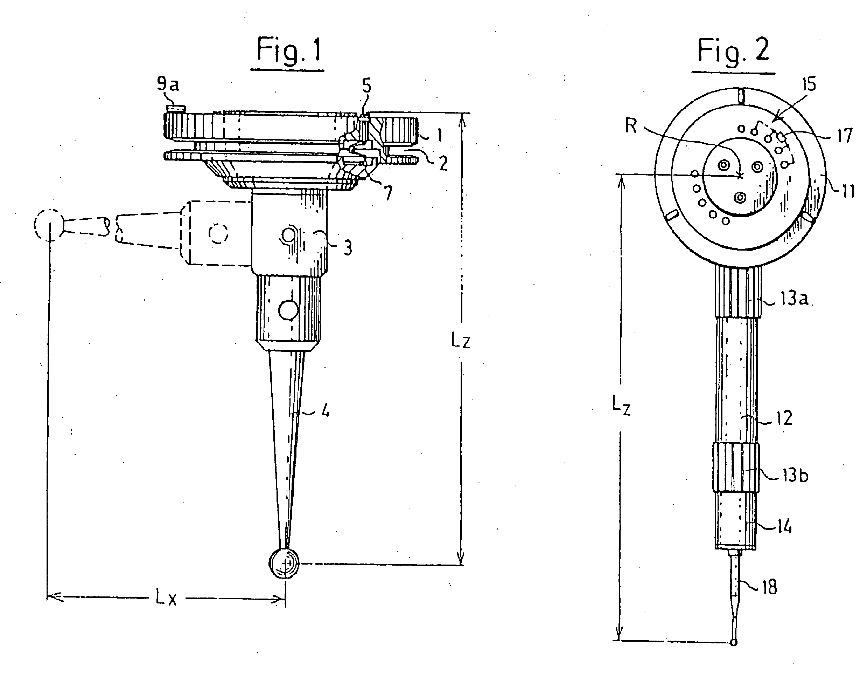

Das erfindungsgemäße Verfahren wird auf einen Taststift angewandt, bzw. auf eine Taststiftkombination. Besonders vorteilhaft ist es, wenn ein Koordinatenmessgerät verwendet wird, das bis zum Nullpunkt bzw. Referenzpunkt R (siehe Fig. 2) des Taststifts vollständig thermisch korrigiert ist. Dann verbleibt nur noch die Temperaturkorrektur des Taststifts, die erfindungsgemäß durchgeführt werden kann.

Um die Genauigkeit weiter zu erhöhen, können die Temperatur-Korrekturdaten für jeden individuellen Taststift einzeln bestimmt und gezielt nur für diesen Taststift verwendet werden.

Bei einer Taststiftkombination kann das erfindungsgemäße Verfahren auf jeden Taststift der Taststiftkombination einzeln angewandt werden.

Die Temperatur eines Taststifts kann auf einfache Weise durch Bestimmen der Temperatur am Aufnahmeteller des Taststifts erfolgen (siehe unten). Optimal wäre es, die Temperatur in der Nähe der Mitte des Taststifts zu messen.

Beispielsweise nach jedem Tasterwechsel wird die Temperatur der eingewechselten Taststiftkombination gemessen. Aus der Differenz zu der Temperatur, bei der die betreffende Taststiftkombination kalibriert worden ist (Referenztemperatur, siehe unten) und unter Berücksichtigung der Taststiftlängen (LX bzw. LZ, d. h. der Länge in x- oder z-Richtung, siehe Fig. 1 und Fig. 2) sowie dem aus der Messhistorie erschlossenen Ausdehnungskoeffizienten des Tastermaterials (Temperatur-Korrekturdaten) wird die zu korrigierende Längenausdehnung berechnet. Dies gilt für den linearen Fall, dass sich die eingewechselte Taststiftkombination in allen Achsrichtungen homogen und ohne Verwindungen ausdehnt.

Die Korrektur der thermischen Längenausdehnung des Taststifts erfolgt, indem die Entfernung des Mittelpunkts der Tastkugel am Taststift von dem für die Korrektur in Betracht zu ziehenden Referenzpunkt am Aufnahmeteller mit dem thermischen Ausdehnungskoeffizienten und der Differenz zwischen der gemessenen Temperatur und derjenigen Temperatur, bei der diese Tasterkonfiguration kalibriert wurde, d.h. der Referenztemperatur, multipliziert wird.

In mathematischen Formeln ausgedrückt ergibt sich folgendes: Sei $L_T$ die Entfernung des Mittelpunkts der Tastkugel am Taststift von dem für die Korrektur in Betracht zu ziehenden Referenzpunkt am Aufnahmeteller bei der Temperatur T und $L_0$ dieselbe Länge bei einer Referenztemperatur $T_0$ von z. B. 20°C. Dann ist - in linearer Näherung - die Länge $L_T$ gegeben durch:

$$L_T = L_0 \cdot \left(1 + \alpha \cdot \Delta T\right)$$

Dabei ist $\alpha$ der lineare thermische Ausdehnungskoeffizient. Er ergibt sich im einfachsten Fall aus zwei Messungen 1 und 2, die bei zwei Temperaturen $T_1$ und $T_2$ durchgeführt wurden und zwei Längen $L_1$ und $L_2$ ergaben zu:

$$\alpha = \left(\frac{L_1}{L_2} - 1\right) \Big/ \left(T_1 - T_2\right)$$

$\Delta T$ ist die Differenz der gemessenen Temperatur T von der Referenztemperatur $T_0$:

$$\Delta T = T - T_0$$

Für die Korrektur $\Delta L$ der Länge erhält man dann

$$\Delta L = L_T - L_0 = \cdot L_0 \cdot \left(1 + \alpha \cdot \Delta T\right) - L_0 = L_0 \cdot \alpha \cdot \Delta T$$

also genau das Beschriebene.

Besonders vorteilhaft ist es, wenn die aus der Messhistorie gewonnenen Temperaturen und Kalibrierdaten zur Bestimmung der Temperatur-Korrekturdaten bzw. des thermischen Ausdehnungskoeffizienten entsprechend der Differenz der zu den Kalibrierdaten gehörigen Temperatur zu einer Referenztemperatur gewichtet werden. Je größer die Temperaturdifferenz ist, desto größer soll das Gewicht sein. Dadurch wird schnell eine hohe Präzision bei der Bestimmung der thermischen Verformung bzw. des thermischen Ausdehnungskoeffizienten erreicht.

Werden bei jeder neuen Kalibrierung die Temperatur und die Kalibrierdaten ermittelt, so können die Temperatur-Korrekturdaten adaptiv verbessert werden. Auf diese Weise können über einen relativ kurzen Zeitraum für die Praxis ausreichend genaue Temperatur-Korrekturdaten ermittelt werden. Bei kontinuierlicher Aufzeichnung, etwa jeden Morgen, ist es auch möglich, schleichende Veränderungen des Taststifts oder eines anderen beobachteten Teils des KMG zu berücksichtigen, indem z. B. nur Temperatur- und Kalibrierdaten des letzen Jahres (oder eines anderen sinnvollen Zeitraums) zur Bestimmung der Korrekturdaten herangezogen werden.

Das erfindungsgemäße Verfahren ist in bestehende Koordinatenmessgeräte integriert, vorzugsweise in Form eines Steuerungsprogramms, dass auf demjenigen Rechner läuft, der ohnehin das Koordinatenmessgerät steuert.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1   einen auswechselbaren Taststift in der Seitenansicht;
Fig. 2   einen auswechselbaren Tastkopf in der Ansicht auf die Wechselfläche; und

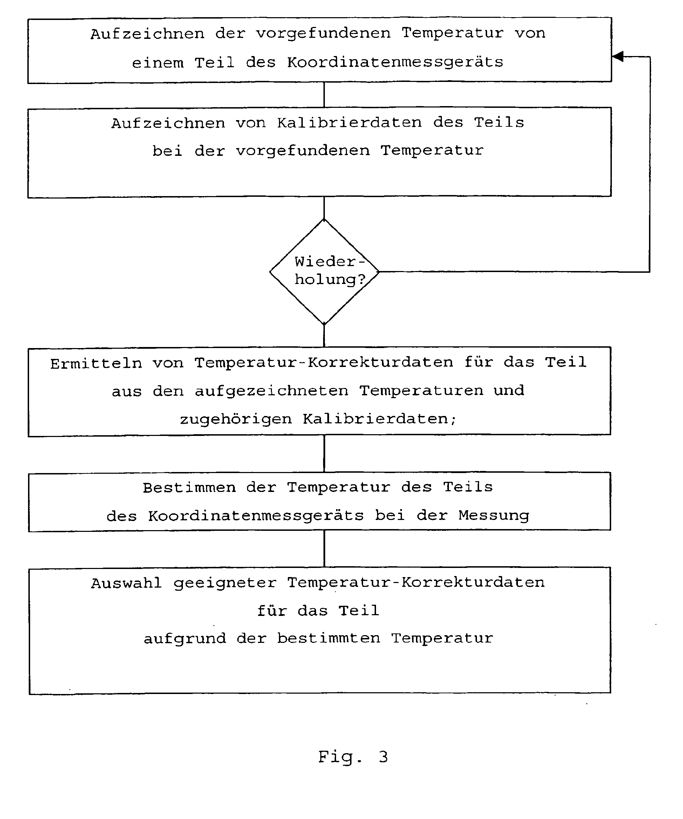

Fig. 3   einen Ablaufplan des erfindungsgemäßen Verfahrens.

In Fig. 1 ist ein Taststift dargestellt, der beispielsweise über die in der US-PS 4,637,119 beschriebene Wechseleinrichtung automatisch aus einem am Rande des Messbereichs des betreffenden Koordinatenmessgeräts aufgebauten Magazin aus eingewechselt werden kann. Dazu ist ein Wechselteller 1 vorgesehen, auf dessen Oberseite drei Zylinderkörper um 120° versetzt angeordnet sind. Mit diesen Zylinderkörpern, von denen in der Darstellung nach Fig. 1 nur ein Zylinderkörper, der Zylinderkörper 9a zu sehen ist, legt sich der Wechselteller 1 reproduzierbar an ein entsprechendes Gegenlager an der Unterseite des Tastkopfs am Koordinatenmessgerät an.

Der Wechselteller 1 trägt an seiner Unterseite einen Montagewürfel 3, an den bis zu fünf Taststifte bzw. Taststiftkombinationen nach allen Seiten abstehend angeschraubt werden können. In der in Fig. 1 gezeigten Darstellung ist an die Unterseite des Montagewürfels 3 lediglich ein Taststift 4 angesetzt.

Der tellerförmige Halter 1 ist außerdem mit einer umlaufenden Nut 2 versehen. In diese Nut greift ein gabelförmiger Träger des Magazins (nicht gezeigt) ein, in das der Taster abgelegt wird.

Der Temperatursensor zum Bestimmen der Temperatur des Taststifts 4 sollte in gutem thermischen Kontakt mit dem Taststift stehen. Er kann beispielsweise in den Taststift integriert sein (siehe DE 88 13 875 U1). Wenn der Tastkopf und der Taststift aus einem Material mit guter Wärmeleitfähigkeit wie z. B. Stahl oder Aluminium bestehen, kann es ausreichend sein, den Sensor in den Aufnahmeteller einzusetzen, der zur Befestigung des Taststifts dient. Aufgrund der Wärmeleitfähigkeit nimmt die komplette einzuwechselnde Einheit, bestehend aus Halter und Taststift, schnell die Temperatur des Tastkopfs an bzw. es kommt schnell zu einem Temperaturausgleich.

In dem in Fig. 1 gezeigten bevorzugten Ausführungsbeispiel ist der Temperatursensor in den Halter 1 integriert. In der aufgebrochenen Darstellung der Fig. 1 erkennt man, dass in den tellerförmigen Halter 1 ein Sensor 7, vorzugsweise in Form eines Platinwiderstands, eingesetzt ist. Dieser Sensor 7 befindet sich in gutem thermischen Kontakt mit dem Taststift 4 sowie den übrigen an den Montagewürfel 3 ansetzbaren Taststiften aufgrund der guten Wärmeleitfähigkeit des metallischen Materials, aus dem die Teile 1, 3 und 4 hergestellt sind.

Die Enden des Messwiderstands 7 sind an Kontaktstifte 5 an der Oberseite des Wechseltellers 1 gelegt. Auf diese Weise wird die am Messwiderstand abfallende Spannung an entsprechende Gegenkontakte im Tastkopf übertragen. Die übertragene Spannung wird von einer nachgeschalteten Messelektronik (nicht gezeigt) ausgewertet.

Dadurch ist es möglich, einmal vorkalibrierte Taststifte unter wechselnden Umgebungstemperaturen einzusetzen. Da die Sensoren ständig in thermischem Kontakt mit dem Taster sind, nehmen sie dessen Temperatur hochgenau auf. Die Abfrage der Tastertemperatur kann deshalb ohne Zeitverzögerung in Bruchteilen einer Sekunde erfolgen.

Im Ausführungsbeispiel gemäß Fig. 2 ist der komplette Tastkopf 14 mit dem darin nachgiebig gelagerten Taststift 18 über ein Verlängerungsstück 12 an dem tellerförmigen Halter 11 befestigt, der die Wechselfläche für ein automatisches Einwechseln an den Messarm eines Koordinatenmessgeräts trägt. Das Gehäuse des Tastkopfs 14, die Verlängerung 12 und der Wechselteller 11 sowie die die Teile miteinander verbindenden Überwurfmuttern 13a, 13b bestehen aus Aluminium und befinden sich - wegen der guten Wärmeleitfähigkeit des Materials - auf gleicher Temperatur.

Ähnlich wie im Ausführungsbeispiel gemäß Fig. 1 ist in den Wechselteller 11 ein Temperatursensor 17 integriert, der in der Draufsicht gemäß Fig. 2 nicht sichtbar ist. Auch der Temperatursensor 17 ist ein Messwiderstand, der vorzugsweise in Vierleitertechnik betrieben wird. Seine Anschlüsse sind dazu auf vier der in der Draufsicht gemäß Fig. 2 sichtbaren Kontaktstifte 15 des Wechseltellers gelegt.

Mit Temperatursensoren, die in Vierleitertechnik betrieben werden, werden bereits die Temperaturen anderer Komponenten eines Koordinatenmessgerätes, wie z. B. die der Maßstäbe erfasst. Der schaltungstechnische Aufwand lässt sich daher gering halten, da die Temperaturen der verschiedenen Messstellen (Maßstab, Werkstück, Taststift) im Multiplex-Betrieb von einem Prozessor abgefragt und ausgewertet werden können.

Bezugszeichenliste

| | |
|---|---|
| 1 | Wechselteller (tellerförmige Halter) |
| 2 | umlaufenden Nut |
| 3 | Montagewürfel |
| 4 | Taststift |
| 5 | Kontaktstifte |
| 7 | Sensor (Messwiderstand) |
| 9a | Zylinderkörper |
| 11 | Wechselteller (tellerförmigen Halter) |
| 12 | Verlängerungsstück |
| 13a, 13b | Überwurfmuttern |
| 14 | Tastkopf |
| 15 | Kontaktstifte |
| 17 | Sensor (Messwiderstand) |
| 18 | Taststift |
| LX | Taststiftlänge in x-Richtung |
| LZ | Taststiftlänge in z-Richtung |
| R | Referenzpunkt |

**Patentansprüche**

**1.** Verfahren zur Korrektur des Temperaturfehlers bei einer Messung mit einem Koordinatenmessgerät mit folgenden Schritten:

a) Bestimmung und Aufzeichnung der vorgefundenen Temperatur von wenigstens einem Teil des Koordinatenmessgeräts und Bestimmung und Aufzeichnung von Kalibrierdaten des wenigstens einen Teils des Koordinatenmessgeräts bei der vorgefundenen Temperatur;

a1) wobei als das wenigstens eine Teil des Koordinatenmessgeräts wenigstens ein Taststift oder eine Taststiftkombination gewählt wird;
a2) wobei die Bestimmung und Aufzeichnung der vorgefundenen Temperatur und/oder der Kalibrierdaten durch das Koordinatenmessgerät durchgeführt wird;
a3) wobei die Kalibierdaten aus aufgenommenen Maschinenkoordinaten berechnet werden;

b) mindestens einmalige Wiederholung von Schritt a) zu einem späteren Zeitpunkt und Aufzeichnung der zu dem späteren Zeitpunkt vorgefundenen neuen Temperatur und zugehörigen Kalibrierdaten;
c) Ermittlung von Temperatur-Korrekturdaten für das wenigstens eine Teil des Koordinatenmessgeräts aus den aufgezeichneten Temperaturen und zugehörigen Kalibrierdaten;
d) Bestimmen der Temperatur des wenigstens einen Teils des Koordinatenmessgeräts bei der Messung; und
e) Auswahl geeigneter Temperatur-Korrekturdaten für das wenigstens eine Teil des Koordinatenmessgeräts aufgrund der bei der Messung bestimmten Temperatur des wenigstens einen Teils des Koordinatenmessgeräts.

**2.** Verfahren nach dem vorhergehenden Anspruch, **dadurch gekennzeichnet, dass** die Temperatur-Korrekturdaten für jeden individuellen Taststift einzeln bestimmt werden.

**3.** Verfahren nach einem der vorhergehenden Ansprüche, **dadurch gekennzeichnet, dass** die bestimmten Kalibrierdaten bei der Ermittlung der Temperatur-Korrekturdaten entsprechend der Differenz der zu den Kalibrierdaten gehörigen Temperatur zu einer Referenztemperatur gewichtet werden.

**4.** Koordinatenmessgerät
mit Mitteln zum Bestimmen und Aufzeichnen der vorgefundenen Temperatur von wenigstens einem Teil des Koordinatenmessgeräts und mit Mitteln zum Bestimmen und Aufzeichnen von Kalibrierdaten des wenigstens einen Teils des Koordinatenmessgeräts bei der vorgefundenen Temperatur;
wobei das wenigstens eine Teil des Koordinatenmessgeräts wenigstens ein Taststift oder eine Taststiftkombination ist;
mit Mitteln zum Berechnen der Kalibierdaten aus aufgenommenen Maschinenkoordinaten;
mit Mitteln zum mindestens einmaligen Wiederholen der Bestimmung von Temperatur und Kalibrierdaten zu einem späteren Zeitpunkt und mit Mitteln zum Aufzeichnen der zu dem späteren Zeitpunkt vorgefundenen neuen Temperatur und zugehörigen Kalibrierdaten;
mit Mitteln zum Ermitteln von Temperatur-Korrekturdaten für das wenigstens eine Teil des Koordinatenmessgeräts aus den aufgezeichneten Temperaturen und zugehörigen Kalibrierdaten;
mit Mitteln zum Bestimmen der Temperatur des wenigstens einen Teils des Koordinatenmessgeräts bei einer Messung; und
mit Mitteln zum Auswählen geeigneter Temperatur-Korrekturdaten für das wenigstens eine Teil des Koordinatenmessgeräts aufgrund der bei der Messung bestimmten Temperatur des wenigstens einen Teils des Koordinatenmessgeräts.

**Claims**

**1.** A method for correcting the temperature error during a measurement with the aid of a coordinate measuring machine, having the following steps:

a) determining and recording the temperature found for at least one part of the coordinate measuring machine and determining and recording calibration data of the at least one part of the coordinate measuring machine at the temperature found;

a1) at least one feeler or a feeler combination being selected as the at least one part of the coordinate measuring machine;
a2) the determination and recording of the temperature found and/or of the calibration data being carried out by the coordinate measuring machine;
a3) the calibration data being calculated from recorded machine coordinates;

b) repeating step a) at least once at a later instant, and recording the new temperature, found at the later instant, and associated calibration data;

c) determining temperature correction data for the at least one part of the coordinate measuring machine from the recorded temperatures and associated calibration data;

d) determining the temperature of the at least one part of the coordinate measuring machine during the measurement; and

e) selecting suitable temperature correction data for the at least one part of the coordinate measuring machine on the basis of the temperature, determined during the measurement, of the at least one part of the coordinate measuring machine.

2. The method as claimed in the preceding claim, **characterized in that** the temperature correction data are determined individually for each individual feeler.

3. The method as claimed in one of the preceding claims, **characterized in that** the determined calibration data are weighted during the determination of the temperature correction data in accordance with the difference between the temperature belonging to the calibration data and a reference temperature.

4. A coordinate measuring machine
having means for determining and recording the temperature found for at least one part of the coordinate measuring machine, and having means for determining and recording calibration data of the at least one part of the coordinate measuring machine at the temperature found;
at least one feeler or a feeler combination being the at least one part of the coordinate measuring machine;
having means for calculating the calibration data from recorded machine coordinates;
having means for repeating at least once the determination of temperature and calibration data at a later instant, and having means for recording the new temperature, found at the later instant, and associated calibration data;
having means for determining temperature correction data for the at least one part of the coordinate measuring machine from the recorded temperatures and associated calibration data;
having means for determining the temperature of the at least one part of the coordinate measuring machine during a measurement; and
having means for selecting suitable temperature correction data for the at least one part of the coordinate measuring machine on the basis of the temperature, determined during the measurement, of the at least one part of the coordinate measuring machine.

**Revendications**

1. Procédé pour corriger l'erreur de température lors d'une mesure avec un appareil de mesure de coordonnées comprenant les étapes suivantes :

a) détermination et enregistrement de la température trouvée d'au moins une partie de l'appareil de mesure de cordonnées puis détermination et enregistrement des données de calibrage de l'au moins une partie de l'appareil de mesure de cordonnées à la température trouvée ;

a1) l'au moins une partie de l'appareil de mesure de cordonnées choisie étant au moins une broche de palpage ou une combinaison de broches de palpage ;
a2) la détermination et l'enregistrement de la température trouvée et/ou des données de calibrage étant effectués par l'appareil de mesure de coordonnées ;
a3) les données de calibrage étant calculées à partir des cordonnées enregistrées de la machine ;

b) répétition au moins une fois de l'étape a) à un moment ultérieur et enregistrement de la nouvelle température trouvée au moment ultérieur et des données de calibrage correspondantes ;
c) détermination des données de correction de la température pour l'au moins une partie de l'appareil de mesure de cordonnées à partir des températures et des données de calibrage correspondantes enregistrées ;
d) détermination de la température de l'au moins une partie de l'appareil de mesure de cordonnées lors de la mesure ; et
e) sélection des données de correction de la température appropriées pour l'au moins une partie de l'appareil de mesure de cordonnées en se basant sur la température de l'au moins une partie de l'appareil de mesure de cordonnées déterminée lors de la mesure.

**2.** Procédé selon la revendication précédente, **caractérisé en ce que** les données de correction de la température sont déterminées individuellement pour chaque broche de palpage.

**3.** Procédé selon l'une des revendications précédentes, **caractérisé en ce que** les données de calibrage déterminées lors de la détermination des données de correction de la température sont pondérées en fonction de la différence entre la température associée aux données de calibrage et une température de référence.

**4.** Appareil de mesure de coordonnées
comprenant des moyens pour déterminer et enregistrer la température trouvée d'au moins une partie de l'appareil de mesure de cordonnées et comprenant des moyens pour déterminer et enregistrer des données de calibrage de l'au moins une partie de l'appareil de mesure de cordonnées à la température trouvée ;
l'au moins une partie de l'appareil de mesure de cordonnées étant au moins une broche de palpage ou une combinaison de broches de palpage ;
comprenant des moyens pour calculer les données de calibrage à partir des cordonnées enregistrées de la machine ;
comprenant des moyens pour répéter au moins une fois la détermination de la température et des données de calibrage à un moment ultérieur et des moyens pour enregistrer la nouvelle température trouvée au moment ultérieur ainsi que les données de calibrage correspondantes ;
comprenant des moyens pour déterminer des données de correction de la température pour l'au moins une partie de l'appareil de mesure de cordonnées à partir des températures et des données de calibrage correspondantes enregistrées ;
comprenant des moyens pour déterminer la température de l'au moins une partie de l'appareil de mesure de cordonnées lors d'une mesure ; et
comprenant des moyens pour sélectionner des données de correction de la température appropriées pour l'au moins une partie de l'appareil de mesure de cordonnées en se basant sur la température de l'au moins une partie de l'appareil de mesure de cordonnées déterminée lors de la mesure.

## Fig.1

9a    5

1

2

7

3

4

Lz

Lx

## Fig. 2

R

15

17

11

13a

12

13b

14

18

Lz

9

Aufzeichnen der vorgefundenen Temperatur von

einem Teil des Koordinatenmessgeräts

Aufzeichnen von Kalibrierdaten des Teils

bei der vorgefundenen Temperatur

Wiederholung?

Ermitteln von Temperatur-Korrekturdaten für das Teil

aus den aufgezeichneten Temperaturen und

zugehörigen Kalibrierdaten;

Bestimmen der Temperatur des Teils

des Koordinatenmessgeräts bei der Messung

Auswahl geeigneter Temperatur-Korrekturdaten

für das Teil

aufgrund der bestimmten Temperatur

Fig. 3